# EUROPEAN PATENT SPECIFICATION

(11) **EP 1 380 552 B1**
(45) Date of publication and mention of the grant of the patent: **15.12.2010**
(21) Application number: 02720693.7
(22) Date of filing: 06.03.2002
(51) Int. Cl.: C03B 37/02

(54) **METHOD FOR PRODUCING MINERAL FIBRES**
VERFAHREN ZUR HERSTELLUNG VON MINERALFASERN
PROCEDE DE FABRICATION DE FIBRES MINERALES

(30) Priority: 19.03.2001 RU 2001107054
(43) Date of publication of application: 14.01.2004
(73) Proprietor: LLC Centre Competence "Basalt", UA 08298 Kotsubinskoe (UA)
(72) Inventor: MEDVEDEV, Aleksandr Aleksandrovich, Kiev, 01021 (UA); TSYBULYA, Yury Lvovich, Kievskaya obl. 08106 (UA); SMIRNOV, Leonid Nikolaevich, Moscow, 117513 (RU); DATSKEVICH, Vladimir Viktorovich, Moscow, 111218 (RU)
(74) Representative: Patentanwälte Zellentin & Partner
(86) International application number: PCT/RU2002/000084
(87) International publication number: WO 2002/074710

(56) References cited:
- WO-A-94/19290
- WO-A1-98/22401
- DE-A1- 19 538 599
- RU-C1- 2 039 715
- RU-C1- 2 068 814
- US-A- 4 698 086
- "Handbook of Chemistry and Physics" 2006, CRC PRESS , XP002440024 page 15-39, Density of various solids, see basalt
- SHKOLNIKOV YA.A. ET AL.: 'Steklyannoe shtapelnoe volokno' KHIMIYA 1969, MOSCOW, pages 44 - 49, XP008084929

## Description

The invention relates to the technoLogy for producing mineral fibers, particular, continuous mineral fibers, from rock, rock-based mixtures, and glass-containing industrial and technical waste.

Known is a method for producing mineral fibers from rock, in particular basalt rock (hereinafter basalt), in which the ground rock is melted in a bath furnace, from which the melt proceeds into a processing zone (feeder), from which a jet feeding of the melt to the nozzles is performed, where the formation of the fibers takes place ("Bazaltovoloknistye kompozitsionnye materialy i konstruktsii" ["Basalt fiber composite materials and constructions"], Kiev, "Naukovaya dumka" publishers, 1980). The basic criteria for a rock being suitable or not for producing fibers, in particular, continuous fibers, are the viscosity of the melts, their fluidity that is determined by the energy required to activate a viscous flow, the surface tension, the range of the processing temperature and other parameters. Substantially all of the parameters are defined by the chemical composition and the temperature of the melt. It is known that the density of basalt fibers as well as the density of silicate melts to which basalt melts may be subsumed, essentially depend on the temperature and the chemical composition of the medium. Considering the fact that the density is a factor of fluidity of a melt and influences the process of formation of the mineral fiber by the nozzle, for a basalt with a given chemical composition the operating temperature in the feeder must be selected such as to extract the melt to the processing with ideal viscosity and density. For determination of the optimum density range of the melt not only the chemical composition of the basalt rock must be taken into account, but also its mineralogical composition, as from the rheology of magmatic melts it is known, for example, that the density of a melt decreases in case of crystallization of olivine and pyroxene, and increases in case of crystallization of plagioclase, said minerals being present in basalt rocks.

Considering a basalt melt not being diathermic and heating occurring predominantly on the outer surface (on the surface of the melt) due to the combustion energy of the gas-air mixture, the characteristics of the melt change substantially over the depth of the feeder, and thus a melt extraction area must be defined in which the processing parameters of the melt are optimal.

Known is a method for producing mineral fibers from rocks comprising preparing a melt from a raw material in a melting furnace, feeding the melt into a feeder for forming an extraction area from where the melt is extracted by means of a feeding device and fed to the nozzles (UA patent no. 3, 1993, Int.Cl. C03B 37/00). The melt extraction area is maintained in the range from 0.8 to 0.2 of the height of the level of the melt in the processing zone. The use of said production method permitted to obtain continuous mineral fibers with an average specific breakage rate of not less than 0.7 breakages per kilogram.

The drawback of said method consists in that there is no linkage of the quality of preparation of the melt in the bath furnace and the feeder, in particular, the height of the zone of extraction of the melt from the feeder is not linked to the height of the melt in the furnace. In case of an insufficient height of the melt in the bath furnace, which may be the result of an insufficient heating temperature of the basalt, feeding of an insufficiently homogenized melt (with remains of gas and/or polycrystalline formations) to the processing zone (feeder) might occur and, consequently, to the melt extraction area for jet feeding to the nozzles. Furthermore, in the known method the optimum range of density of the melt in the processing zone (feeder) and, consequently, in the extraction area, is not specified. As a result the fibers obtained according to the known method do not always comply with modem requirements for continuous mineral fibers for textile applications, as such fibers must have an average specific breakage rate of maximum 0.6 - 0.5 breakages per kilogram.

Known is a furnace for glass melting with a melting tank and a working tank, the surface area of the melting tank corresponding to 0.6 to 1.3 of the surface area of the working tank (RU patent no. 2033977, 1995, Int.Cl. C03B 5/00). In said apparatus the melt is extracted by means of jet feeding devices from an extraction area that is located in the working tank (the feeder), in a manner analogous to the examples of the previous patent. With said apparatus an average productivity per single unit of up to 150 kilograms of basalt fibers per 24 hours was achieved.

The drawback of said apparatus consists in that there is no linkage between the overall surface area of the front openings of the jet feeding devices through which the melt is fed from the extraction area to the nozzles and the surface area of the melting tank. This fact might have a negative impact on the increase of productivity of the furnace. E.g., if the overall surface area of the front openings of the jet feeding devices exceeds the optimal value, feeding of the melt from the melting tank to the working tank and to the nozzles for formation of the fibers is intensified. In result insufficiently homogenized melt gets into the extraction area, which leads to an increase of the breakage rate and to a decrease of the efficiency of the processing units. Therefore, the known apparatus does not permit to ensure an average productivity of 170 kilograms per 24 hours per single unit or more, which inhibits a decrease of the production costs of continuous mineral fibers. A further method of making mineral fibers is known from DE-A-195 38 599.

It is an object of the present invention to increase the quality of the fibers, which is expressed in terms of a decreased average specific breakage rate during spinning of the continuous fiber, and to increase the productivity of fiber processing by generating an area for extraction of the melt with the best processing characteristics.

The object is achieved by a method for producing mineral fibers from rock, rock-based mixtures, glass-containing industrial and technical waste, in which, after mechanical separation of non-glass-containing and predominantly glass-containing material, the predominantly glass-containing material with a particle size not exceeding 80 mm is malted in a melting furnace, and the melt is fed to a processing zone (feeder) to form an extraction area for jet feeding the melt to nozzles forming the fibers, wherein the ratio between the height of the melt In the furnace and the height of the jet feeder openings ranges from 1.4 to 50, preferably from 7.51 to 50. The object is also achieved by a respective method, wherein the ratio between the surface area of the melt in the furnace and the overall area of the jet feeder front openings ranges from 1000 to 3500. Thus, the melt extraction area (melt extraction "spot") is positioned with respect to height within the limits of from the bottom of the feeder to 0.9 times of the melt level in the feeder. Besides, the area of the projection of the melt extraction area onto a horizontal plane is not less the overall surface area of the end openings of the devices (elements), which ensure extraction of the melt from the melt extraction zone.

The indicated features are essential for the following reasons:
1) The ratio between the height of the melt in the bath furnace and the height of the melt extraction area ranging from 1.4 to 50 ensures a link between the quality of melting (preparation) of the starting raw material in the bath furnace and optimum parameters of the melt in the processing zone and in the extraction area. As the temperature interval of processing known basalts ranges from 30 to 100°C, and the temperature of the melt during heating decreases from the surface in average by 15 - 17°C every 10 mm, the claimed ratio of the heights in effect provides for any concrete type of raw material (in particular basalt) optimum thermal conditions in the bath furnace and the feeder, including the melt extraction area for jet feeding to the nozzles. This in turn ensures a feeding of a homogenized melt to the processing and stabilizes the fiber forming process and improves fiber quality, which becomes apparent in a lower average specific breakage rate in comparison to the formerly reached value of 0.7 breakages per kilogram.
2) The ratio between surface area of the melt in the bath furnace (the melting tank) and the overall area of the jet feeder front openings ranging from 1000 to 3500 ensures the proceeding of the melt from the bath furnace into the feeder and into the melt extraction area with optimum processing characteristics. If said ratio is lower than 10 an unduly intensive feeding of the melt to the processing occurs. As a consequence the mineral raw material in the bath furnace is not able to become entirely homogenous, and a melt with remains of gases and/or polycrystalline formations might get into the extraction area as well as to the nozzles. This results in an increase of the breakage rate and limits an increase of the productive capacity per individual unit. If the ratio between the surface area of the melt in the bath furnace (the melting tank) and the area of the projection of the melt extraction area onto a horizontal plane exceeds 6000, the melting capacities are not used to the full-scale capacity, and the efficiency of production of continuous fibers decreases essentially. Maintaining the ratio between the surface area of the melt in the bath furnace (the melting tank) and the overall area of the of the jet feeder front openings in the range between 10 and 6000 ensures a high efficiency of production of continuous mineral fibers and to increase the average productivity per single unit to a level of more than 150 kilograms per 24 hours.

The method is illustrated by the following examples.

**Example 1**

A basalt rock having the following composition (mass per cent): 52.8-53.7 SiO₂, 0.5 - 0.6 TiO₂, 17.3 - 19.7 Al₂O₃, 9.8 - 10.6 Fe₂O₃ + FeO, 3.1 - 6.3 MgO, 7.1 - 8.0 CaO, 2.8 Na₂O, 1.6 K₂O, others: 1.8 was ground to a particle size of 40 - 70 mm, sorted mechanically and charged into a melting furnace, where a temperature of 1450 ± 10°C was maintained by means of the combustion energy of a gas-air mixture to obtain a homogenous melt. The melt entered to the processing zone, i.e., the feeder, by gravity flow at the bottom of which the tubes of the jet feeding pipes were situated, said tubes having openings at the front at the lateral surfaces near the front. The temperature of the melt in the feeder was maintained in the range of 1350 - 1300°C, and a density of the melt in the range of 3.05 ± 0.05 g/cm³ was ensured. The openings of the jet feeders were situated in the extraction area within the limits of 0.7 - 0.4 of the height of the level of the melt in the feeder, the ratio between the level of the melt in the bath furnace and the height of the extraction zone was 25. The ratio between the surface area of the melt in the bath furnace (the melting tank) and the overall area of the front openings of the jet feeders was 2500. By means of the jet feeders the melt was supplied from the processing zone to the jet nozzle where the formation of the fibers occurred. Under production conditions an average specific breakage rate of the continuous basalt fibers of 0.5 breakages per kilogram was achieved, and the average productivity per individual unit was 170 kilograms per 24 hours.

**Example 2**

A basalt rock having the following composition (mass per cent): 48.0 - 51.9 SiO₂, 0.5 - 2.5 TiO₂, 12.5 - 16.6 Al₂O₃, 14.3 - 14.7 Fe₂O₃ + FeO, 4.8 - 5.7 MgO, 9.3 - 9.4 CaO, 2.8 Na₂O + K₂O, others: 1.0 - 1.8 was ground to a particle size of 5 - 10 mm, sorted mechanically and charged into a melting furnace, where a temperature of 1450 ± 30°C was maintained by means of the combustion energy of a gas-air mixture to obtain a homogenous melt. The melt entered to the processing zone, i.e., the feeder, by gravity flow at the bottom of which nozzle containers were situated with an open front surface, through which the melt was supplied to the nozzles for formation of the fibers. The temperature of the melt in the feeder was maintained in the range of 1350 - 1300°C and a density of the melt in the range of 3.05 ± 0.05 g/cm³ was ensured. The front surfaces of the jet feeders were situated in the extraction area within the limits of 0.8 - 0.2 of the height of the level of the melt in the feeder. The ratio between the surface area of the melt in the bath furnace and the overall area of the front openings of the nozzle feeders was 18. Under these production conditions an average productivity of 160 kilograms per 24 hours per individual unit was achieved.

**Example 3**

Mineral fibers were produced by the method as described in Example 2 from ashes from electrical power plants to which calcite was added according to the invention.

The ashes consisted of the following components (mass per cent): 43.6 SiO₂, 16.2 Al₂O₃, 1.6 Fe₂O₃, 5.25 FeO, 0.7 Li₂O, 26.7 CaO, 3.11 MgO, 0.67 K₂O, and other components: 2.17.

From 63 per cent ashes with the indicated composition, with the addition of calcite, mineral fibers were produced with an average productivity per individual unit of 155 kilograms per 24 hours.

**Example 4**

Mineral fibers were produced by the method as described in Example 2 at a temperature in the bath furnace of 1300 ± 30°C and a temperature in the feeder of 1100 - 1270°C from glass-containing industrial waste (tubes of luminescent devices) according to the invention.

The glass-containing industrial waste consisted of the following components (mass per cent): 72.0 SiO₂, 2.0 Al₂O₃, < 0.01 FeO, 19.5 - 18 (Na₂O + K₂O), 8.0 (CaO + MgO + BaO), traces of PbO, Sb₂O₃, As₂O₃, oxides of Cd and Ti, and other components.
Under the experimental conditions mineral fibers were produced with an average productivity per unit of 155 kilograms per 24 hours.

## Claims

1. A method for producing mineral fibers from rock, rock-based mixtures, glass-containing industrial and technical waste, in which, after mechanical separation of non-glass-containing and predominantly glass-containing material,
the predominantly glass-containing material with a particle size not exceeding 80 mm is melted in a melting furnace, and
the melt is fed to a processing zone (feeder) to form an extraction area for jet feeding the melt to nozzles forming the fibers,
**characterized in that**
the ratio between the height of the melt in the furnace and the height of the jet feeder openings ranges from 1.4 to 50.

2. The method according to claim 1, **characterized in that** the ratio between the height of the melt in the furnace and the height of the jet feeder openings ranges from 7.51 to 50.

3. A method for producing mineral fibers from rock, rock-based mixtures, glass-containing industrial and technical waste, in which, after mechanical separation of non-glass-containing and predominantly glass-containing material,
the predominantly glass-containing material with a particle size not exceeding 80 mm is melted in a melting furnace, and
the melt is fed to a processing zone (feeder) to form an extraction area for jet feeding the melt to nozzles forming the fibers,
**characterized in that**
the ratio between the surface area of the melt in the furnace and the overall area of the jet feeder front openings ranges from 1000 to 3500.

## Patentansprüche

1. Verfahren zur Herstellung von Mineralfasern aus Gestein, Mischungen auf Basis von Gestein, glashaltigem, industriellem und technischem Abfall, bei dem, nach mechanischer Trennung von nicht glashaltigem Material und vorwiegend glashaltigem Material,
das vorwiegend glashaltige Material mit einer 80 mm nicht überschreitenden Partikelgröße in einem Schmelzofen geschmolzen wird, und
die Schmelze einer Verarbeitungszone (Feeder) zugeführt wird zur Bildung eines Entnahmebereichs zur Fließzufuhr (*jet feeding*) der Schmelze zu Düsen, die die Fasern formen,
**dadurch gekennzeichnet, dass**
das Verhältnis zwischen der Höhe der Schmelze im Ofen und der Höhe der Fließspeiseröffnungen (*jet feeder openings*) zwischen 1,4 und 50 liegt.

2. Verfahren nach Anspruch 1, **dadurch gekennzeichnet, dass** das Verhältnis zwischen der Höhe der Schmelze im Ofen und der Höhe der Fließspeiseröffnungen zwischen 7.5 und 50 liegt.

3. Verfahren zur Herstellung von Mineralfasern aus Gestein, Mischungen auf Basis von Gestein, glashaltigem, industriellem und technischem Abfall, bei dem, nach mechanischer Trennung von nicht glashaltigem und vorwiegend glashaltigem Material,
das vorwiegend glashaltige Material mit einer 80 mm nicht überschreitenden Partikelgröße in einem Schmelzofen geschmolzen wird, und
die Schmelze einer Verarbeitungszone (Feeder) zugeführt wird zur Bildung eines Entnahmebereichs zur Fließzufuhr (*jet feeding*) der Schmelze zu Düsen, die die Fasern formen,
**dadurch gekennzeichnet, dass**
das Verhältnis zwischen der Oberfläche der Schmelze im Ofen und der Gesamtfläche der Fließspeiserfrontöffnungen (*jet feeder front openings*) zwischen 1000 und 3500 liegt.

## Revendications

1. Procédé de fabrication de fibres minérales à partir de roche, de mélanges à base de roche, de déchets industriels et technologiques contenant du verre, dans lequel, après la séparation mécanique de la matière ne contenant pas de verre et de la matière à teneur prédominante en verre,
la matière à teneur prédominante en verre dont la granulométrie ne dépasse pas 80 mm est fondue dans un four de fusion et
la matière fondue est alimentée vers une zone de traitement (dispositif d'alimentation) pour former une zone d'extraction en vue d'alimenter la matière fondue, sous l'action de jets, vers des buses formant les fibres, **caractérisé en ce que**
le rapport entre la hauteur de la matière fondue dans le four et la hauteur des ouvertures du dispositif d'alimentation à jets est compris entre 1,4 et 50.

2. Dispositif selon la revendication 1, **caractérisé en ce que** le rapport entre la hauteur de la matière fondue dans le four et la hauteur des ouvertures du dispositif d'alimentation à jets est compris entre 7,51 et 50.

3. Procédé de fabrication de fibres minérales à partir de roche, de mélanges à base de roche, de déchets industriels et technologiques contenant du verre, dans lequel, après la séparation mécanique de la matière ne contenant pas de verre et de la matière à teneur prédominante en verre,
la matière à teneur prédominante en verre dont la granulométrie ne dépasse pas 80 mm est fondue dans un four de fusion et
la matière fondue est alimentée vers une zone de traitement ( dispositif d'alimentation) pour former une zone d'extraction en vue d'alimenter la matière fondue, sous l'action de jets, vers des buses formant les fibres, **caractérisé en ce que**
le rapport entre la surface de la matière fondue dans le four et la surface totale des ouvertures frontales du dispositif d'alimentation à jets est compris entre 1 000 et 3 500.
